# EUROPEAN PATENT SPECIFICATION

(11) **EP 4 513 603 B1**
(45) Date of publication and mention of the grant of the patent: **15.07.2026**
(21) Application number: 23791790.1
(22) Date of filing: 13.04.2023
(51) Int. Cl.: H01M 4/04, H01M 4/139, H01M 4/62

(54) **ELECTRODE MANUFACTURING METHOD**
ELEKTRODENHERSTELLUNGSVERFAHREN
PROCÉDÉ DE FABRICATION D'ÉLECTRODE

(30) Priority: 22.04.2022 JP 2022071034
(43) Date of publication of application: 26.02.2025
(73) Proprietor: KABUSHIKI KAISHA TOYOTA JIDOSHOKKI, Kariya-shi, Aichi 448-8671 (JP)
(72) Inventor: NAKAMURA Tomohiro, Kariya-shi, Aichi 448-8671 (JP); KAMIYA Ryota, Kariya-shi, Aichi 448-8671 (JP); SAKAMOTO Syunya, Kariya-shi, Aichi 448-8671 (JP); HIROSE Takayuki, Kariya-shi, Aichi 448-8671 (JP)
(74) Representative: TBK
(86) International application number: PCT/JP2023/015052
(87) International publication number: WO 2023/204142

(56) References cited:
- JP-A- 2005 056 815
- JP-A- 2006 210 002
- JP-A- 2017 168 270
- JP-A- 2019 102 165
- JP-A- 2020 140 860
- JP-A- 2020 177 761
- US-A1- 2012 070 715

## Description

### TECHNICAL FIELD

The present disclosure relates to a method for manufacturing an electrode.

### BACKGROUND ART

In order to insulate current collectors from each other in a power storage device that includes stacked electrodes, seal components are welded to the current collectors in some cases when the electrodes are produced. For example, in a method for manufacturing an electrode described in Patent Literature 1, a seal component is disposed on and welded to a current collector by performing pressure heating, in which a heater generates heat while being pressed against the seal component.

Further relevant prior art is disclosed in JP 2020 140860 A and JP 2006 210002 A.

### CITATION LIST

### Patent Literature

Patent Literature 1: Japanese Laid-Open Patent Publication No. 2018-106963

### SUMMARY OF INVENTION

### Technical Problem

When a seal component is welded to a current collector through pressure heating, the seal component expands due to the heat. In the welding of the seal component to the current collector, when the heating of the heater is stopped, the expanded seal component is cooled and thus shrinks. If there is a significant difference in the amount of shrinkage between the seal component and the current collector, the shrinkage of the seal component can compress the current collector, potentially causing wrinkles to form on the current collector.

### Solution to Problem

In accordance with an aspect of the present disclosure, a method for manufacturing an electrode is provided according to claim 1. The electrode includes a current collector that includes a first surface and a second surface opposite to the first surface, active material layers provided on the first surface and the second surface, and a seal component welded to the current collector. Each of the first surface and the second surface includes a part in which the active material layer is provided, and an uncoated portion in which the active material layer is not provided. The manufacturing method includes a disposing step of disposing the seal component on the uncoated portion of at least one of the first surface and the second surface, and a welding step of welding the seal component to the current collector by performing pressure heating in which the seal component is heated while being pressed against the uncoated portion by using a jig. The jig includes a deformable heater portion configured to heat the seal component, and a pressing portion configured to press the heater portion against the seal component. A direction in which the pressing portion presses the seal component is a pressing direction. The pressing portion is positioned alongside the heater portion and the seal component in the pressing direction, and is configured to be compressively deformed in the pressing direction when pressing the heater portion. The disposing step includes disposing the seal component in the uncoated portion such that an exposed portion is formed in the uncoated portion. The exposed portion is a part in which the seal component is not disposed and being positioned between the active material layer and the seal component. The welding step includes causing the heater portion to generate heat in a state in which the heater portion is pressed against the seal component disposed in the uncoated portion and the exposed portion, while deforming the heater portion such that the heater portion conforms to the compressive deformation of the pressing portion.

According to the above-described method, the seal component is welded to the current collector by causing the heater portion to generate heat in a state in which the heater portion is pressed against the seal component and the exposed portion, while deforming the heater portion such that the heater portion conforms to the compressive deformation of the pressing portion. In the above-described method, the amount of thermal expansion of the current collector due to heat transfer from the heater portion is larger than that in a case in which pressure heating is performed only on the seal component without performing pressure heating on the exposed portion. Therefore, since the difference in the amount of thermal expansion between the seal component and the current collector is reduced, the difference in the amount of shrinkage between the seal component and the current collector due to cooling of the current collector and the seal component is reduced. Therefore, when the seal component is welded to the current collector, the current collector is prevented from wrinkling due to the difference in the amount of shrinkage between the seal component and the current collector.

In the above-described method for manufacturing the electrode, the jig may be one of two jigs positioned on opposite sides of the current collector in the pressing direction, and each of the jigs may include the heater portion and the pressing portion. The disposing step may include disposing the seal component on the uncoated portion of each of the first surface and the second surface. The welding step may include performing the pressure heating, by using the two jigs, on the seal components disposed on the uncoated portions of the first surface and the second surface, and on the exposed portions of the first surface and the second surface.

The above-described method causes the heater portions to generate heat in a state in which the heater portions are pressed against the seal components and the exposed portions, while deforming the heater portions such that the heater portions conform to the compressive deformation of the pressing portions on both the first surface and the second surface of the current collector. As a result, the seal components are welded to the uncoated portions on the opposite surfaces of the current collector by the heater portions and the pressing portions.

In the above-described method for manufacturing the electrode, the seal component may include a main body disposed on the uncoated portion, and a protruding portion that extends from the main body and protrudes beyond an outer edge of the current collector. The welding step may include causing the heater portion to generate heat in a state in which the heater portion is pressed against the seal component except for at least a part of the protruding portion.

According to the above-described method, the heater portion generates heat in a state in which the heater portion is pressed against the seal component, except for at least a part of the protruding portion. Therefore, the seal component is welded to the current collector by causing the heater portion to generate heat in a state in which the heater portion is pressed against the main body. In this manner, the seal component is welded to the current collector without performing pressure heating on the entire protruding portion by the heater portion. Therefore, the amount of thermal expansion of the seal component is reduced as compared to a case in which the entire seal component is subjected to pressure heating by the heater portion. This reduces the amount of shrinkage of the seal component due to cooling of the seal component. Since the difference in the amount of shrinkage between the seal component and the current collector is further reduced, the occurrence of wrinkles in the current collector is further suppressed.

### Advantageous Effects of Invention

With the present invention, when a seal component is welded to a current collector, the current collector is prevented from wrinkling due to the difference in the amount of shrinkage between the seal component and the current collector.

### BRIEF DESCRIPTION OF DRAWINGS

Fig. 1 is a cross-sectional view of a power storage device according to an embodiment.
Fig. 2 is an enlarged partial cross-sectional view of the power storage device shown in Fig. 1.
Fig. 3 is an explanatory top view of a method for manufacturing an electrode according to the embodiment, illustrating a state in which a seal component is disposed on a current collector of the electrode in the power storage device shown in Fig. 1.
Fig. 4 is an explanatory cross-sectional view of the method for manufacturing the electrode according to the embodiment, illustrating a state before pressure heating is performed on the current collector on which the seal component shown in Fig. 3 is disposed.
Fig. 5 is an explanatory cross-sectional view of the method for manufacturing the electrode according to the embodiment, illustrating a state in which pressure heating is being performed on the current collector, on which the seal component shown in Fig. 3 is disposed.
Fig. 6 is an explanatory cross-sectional view of the method for manufacturing the electrode according to the embodiment, illustrating a state in which the seal component shown in Fig. 3 is integrated with the electrode by performing pressure heating.
Fig. 7 is an explanatory cross-sectional view of a method for manufacturing a power storage device according to the embodiment, illustrating a stacked body formed by stacking the electrodes shown in Fig. 6, separators, and spacers.
Fig. 8 is an explanatory cross-sectional view of a method for manufacturing an electrode according to a modification, illustrating a state before pressure heating is performed on a current collector, on which the seal component shown in Fig. 3 is disposed.

### DESCRIPTION OF EMBODIMENTS

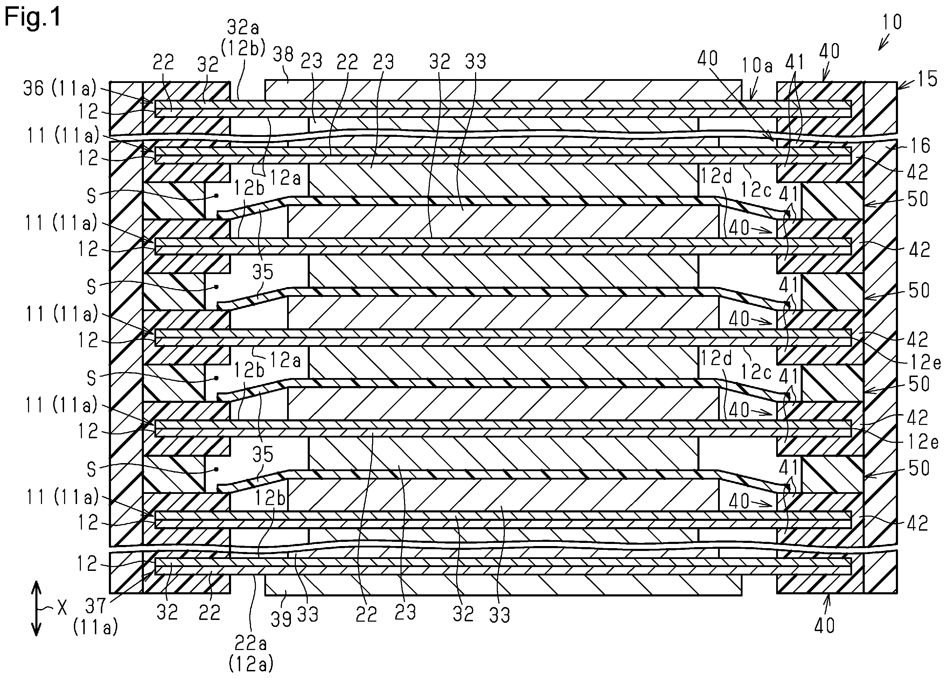

A method for manufacturing an electrode according to an embodiment will be described with reference to Figs. 1 to 7. For ease of explanation, a power storage device and an electrode will be described below before the method for manufacturing the electrode.

### Power Storage Device

As shown in Fig. 1, a power storage device 10 includes a stacked body 10a and a sealing body 15. The stacked body 10a is formed by stacking multiple electrodes 11 between a positive terminal electrode 36 and a negative terminal electrode 37. The power storage device 10 in the present embodiment is a lithium-ion rechargeable battery. Hereinafter, the stacking direction of the electrodes 11 will be simply referred to as a stacking direction X.

### Electrodes

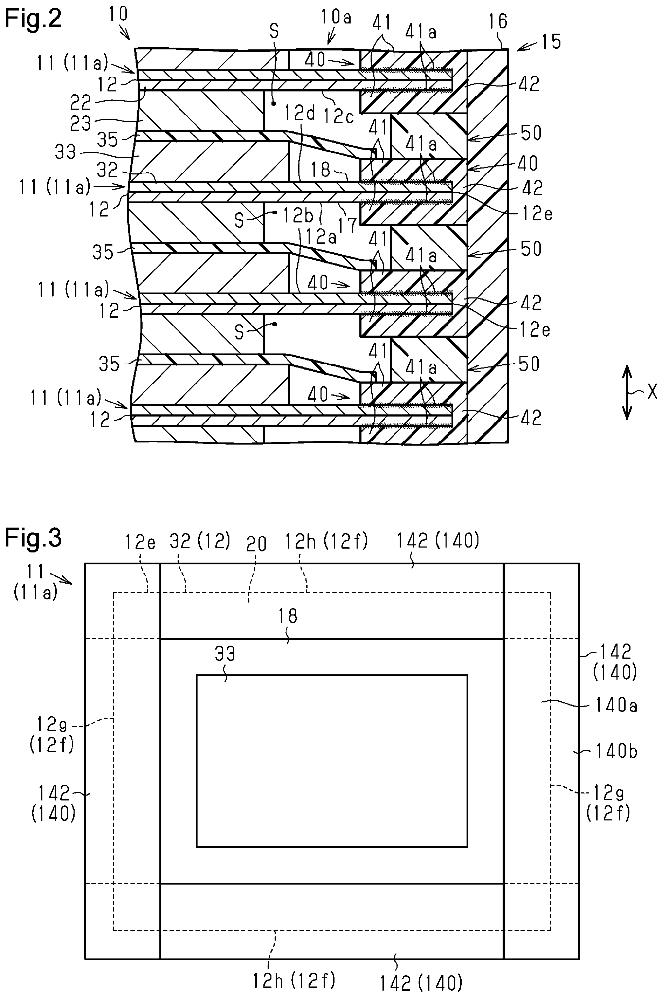

As shown in Figs. 1 and 2, each of the multiple electrodes 11 includes a current collector 12, a positive electrode active material layer 23 as an active material layer, and a negative electrode active material layer 33 as an active material layer. The current collector 12 is a sheet. Active material layers are provided on both surfaces of the current collector 12. The current collector 12 includes a first surface 12a and a second surface 12b, which are opposite to each other in the stacking direction X. The positive electrode active material layer 23 is provided on the first surface 12a of the current collector 12, and the negative electrode active material layer 33 is provided on the second surface 12b. Each of the multiple electrodes 11 is a bipolar electrode formed by such a current collector 12. In the stacked body 10a, the electrodes 11 are stacked such that the first surface 12a of the current collector 12 of each electrode 11 faces the second surface 12b of the current collector 12 of the adjacent electrode 11 in the stacking direction X.

In plan view in the stacking direction X (hereinafter, simply referred to as plan view), the positive electrode active material layer 23 is formed in a central portion of the first surface 12a of each current collector 12. A peripheral portion of the first surface 12a of the current collector 12 in plan view is a positive electrode uncoated portion 12c, on which the positive electrode active material layer 23 is not provided. The positive electrode uncoated portion 12c is disposed to surround the positive electrode active material layer 23 in plan view. In plan view, the negative electrode active material layer 33 is formed in a central portion of the of the second surface 12b of each current collector 12. A peripheral portion of the second surface 12b of the current collector 12 in plan view is a negative electrode uncoated portion 12d, on which the negative electrode active material layer 33 is not provided. The negative electrode uncoated portion 12d is disposed to surround the negative electrode active material layer 33 in plan view.

Each positive electrode active material layer 23 and the corresponding negative electrode active material layer 33 are arranged to face each other in the stacking direction X. For example, the negative electrode active material layers 33 are formed to be slightly larger than the positive electrode active material layers 23. In plan view, the entire formation region of each positive electrode active material layer 23 is located within the formation region of each negative electrode active material layer 33.

### Details of Current Collectors

In the present embodiment, each current collector 12 is formed by integrating a sheet-shaped positive electrode current collector 22 and a sheet-shaped negative electrode current collector 32. The first surface 12a of each current collector 12 is formed by one surface of the positive electrode current collector 22, and the second surface 12b is formed by one surface of the negative electrode current collector 32. The positive electrode current collector 22 and the negative electrode current collector 32 may be integrated by bonding the surface of the positive electrode current collector 22 that is on the side opposite to the first surface 12a to the surface of the negative electrode current collector 32 that is on the side opposite to the second surface 12b. The positive electrode current collector 22 and the negative electrode current collector 32 have the same shape in plan view.

As shown in Fig. 3, each current collector 12 has four sides 12f and a rectangular shape in plan view. An outer edge 12e of the current collector 12 is formed by the four sides 12f. In some cases, two of the sides 12f are also referred to as short sides 12g, and the two sides 12f longer than the short sides 12g are also referred to as long sides 12h.

As shown in Fig. 1, the positive electrode current collectors 22 and the negative electrode current collectors 32 are chemically inert electric conductors for allowing current to continuously flow through the positive electrode active material layers 23 and the negative electrode active material layers 33 during discharging or charging of the lithium-ion rechargeable battery. The positive electrode current collectors 22 and the negative electrode current collectors 32 may be made of, for example, a metal, a conductive plastic, or a conductive inorganic material.

The conductive plastic may be a plastic obtained by adding a conductive filler to a conductive polymer material or a non-conductive polymer material as necessary. The positive electrode current collectors 22 and the negative electrode current collectors 32 may each include one or more layers containing a metal or a conductive plastic. The surfaces of the positive electrode current collectors 22 and the negative electrode current collector 32 may be covered with a known protective layer. The surfaces of the positive electrode current collectors 22 and the negative electrode current collectors 32 may be plated with a metal by a known method such as a plating treatment.

The positive electrode current collectors 22 and the negative electrode current collectors 32 may include, for example, foils, sheets, films, wires, rods, meshes, clad materials, or the like. In a case in which the positive electrode current collectors 22 and the negative electrode current collectors 32 are metal foils, the positive electrode current collectors 22 and the negative electrode current collectors 32 may be, for example, aluminum foils, copper foils, nickel foils, titanium foils, or stainless steel foils. The positive electrode current collectors 22 and the negative electrode current collectors 32 may be alloy foils of any of the above-mentioned metals. When the positive electrode current collectors 22 and the negative electrode current collectors 32 are metal foils, the thicknesses of each positive electrode current collector 22 and each negative electrode current collector 32 are, for example, in a range of 1 µm to 100 µm. The positive electrode current collectors 22 of the present embodiment are aluminum foils. The negative electrode current collectors 32 of the present embodiment are copper foils. In order to stabilize the structure of the stacked body 10a, the current collectors 12 of the positive terminal electrode 36 and the negative terminal electrode 37 and some of the current collectors 12 of the electrodes 11, which are formed of bipolar electrodes, for example, may have a thickness greater than or equal to 100 µm.

The current collectors 12 are not limited to a form in which the positive electrode current collector 22 and the negative electrode current collector 32 are integrated. For example, each current collector 12 may be a single current collector sheet formed of a metal, a conductive plastic, a conductive inorganic material, or the like. Alternatively, each current collector 12 may be formed of a single current collector sheet with a coating layer formed by plating treatment on one surface. In these cases, one current collector 12 functions as the positive electrode current collector 22 and the negative electrode current collector 32.

### Details of Positive Electrode Active Material Layers and Negative Electrode Active Material Layers

Each positive electrode active material layer 23 includes a positive electrode active material capable of storing and releasing lithium ions as charge carriers. The positive electrode active material may be, for example, a polyanionic compound such as olivine-type lithium iron phosphate (LiFePO₄), lithium composite metallic oxides having a layered rock-salt structure, or spinel-structure metal oxides. A material that can be used as the positive electrode active material of the power storage device 10 such as a lithium-ion rechargeable battery is employed as the positive electrode active material.

Each negative electrode active material layer 33 includes a negative electrode active material capable of storing and releasing charge carriers, which are lithium ions. The negative electrode active material is not particularly limited and can be any element, alloy, or compound capable of storing and releasing charge carriers such as lithium ions. For example, the negative electrode active material may be Li or an element that can be alloyed with carbon, a metal compound, or lithium, or a compound thereof. The carbon may be, for example, natural graphite, artificial graphite, hard carbon (non-graphitizable carbon), or soft carbon (graphitizable carbon). The artificial graphite may be, for example, highly oriented graphite or mesocarbon microbeads. Elements that can be alloyed with lithium may be silicon or tin.

The positive electrode active material layer 23 and the negative electrode active material layer 33 may contain a conductive aid for increasing electric conductivity, a binder, electrolytes (polymer matrices, ion-conductive polymers, liquid electrolytes, and the like), electrolyte-supporting salts (lithium salts) for increasing ionic conductance, and the like as necessary. The types and compound ratios of other components contained in the positive electrode active material layer 23 and the negative electrode active material layer 33 are not particularly limited.

The conductive aid may be, for example, acetylene black, carbon black, or graphite. The binder may be, for example, a fluorine-containing resin such as polyvinylidene fluoride, polytetrafluoroethylene, or fluororubber, a thermoplastic resin such as polypropylene or polyethylene, an imide-based resin such as polyimide or polyamide-imide, an alkoxysilyl group-containing resin, an acrylic resin such as poly (meth) acrylic acid, styrene-butadiene rubber, carboxymethyl cellulose, an alginate such as sodium alginate or ammonium alginate, a water-soluble cellulose ester crosslinked product, or a starch-acrylic acid graft polymer. These binders may be used alone or in combination. As the solvent or dispersion medium, for example, water, N-methyl-2-pyrrolidone or the like is used.

### Separators

The power storage device 10 includes separators 35. Each separator 35 is disposed between a positive electrode active material layer 23 and a negative electrode active material layer 33. The separator 35 is a member that separates the positive electrode active material layer 23 and the negative electrode active material layer 33 from each other to prevent short circuits due to contact between electrodes and allows charge carriers such as lithium ions to pass therethrough.

The separators 35 are, for example, porous sheets or nonwoven fabric containing a polymer that absorbs and retains electrolyte. The electrolyte with which the separators 35 are impregnated may be a liquid electrolyte containing a nonaqueous solvent and an electrolyte salt dissolved in the nonaqueous solvent, or a polymer gel electrolyte containing an electrolyte held in a polymer matrix. In the present embodiment, a liquid electrolyte is used as the electrolyte. The electrolyte salt in the liquid electrolyte may be a known lithium salt such as LiClO₄, LiAsF₆, LiPF₆, LiBF₄, LiCF₃SO₃, LiN(FSO₂)₂, and LiN(CF₃SO₂) ₂. The nonaqueous solvent may be a known solvent such as cyclic carbonates, cyclic esters, chain carbonates, chain esters, and ethers. These known solvent materials may be used in combination of two or more thereof. The material of the separators 35 may be, for example, polypropylene, polyethylene, polyolefin, or polyester. The separators 35 may have a single-layer structure or a multilayer structure. The multilayer structure may include, for example, an adhesive layer, a ceramic layer as a heat-resistant layer, or the like.

### Positive Terminal Electrodes and Negative Terminal Electrodes

In the stacking direction X, the multiple electrodes 11 are each located between a positive terminal electrode 36 and a negative terminal electrode 37. The positive terminal electrode 36 includes a current collector 12 and a positive electrode active material layer 23 provided on the first surface 12a of the current collector 12. The positive terminal electrode 36 has the same configuration as the electrode 11 except that it does not include a negative electrode active material layer 33. The negative terminal electrode 37 includes a current collector 12 and a negative electrode active material layer 33 provided on the second surface 12b of the current collector 12. The negative terminal electrode 37 has the same configuration as the electrode 11 except that it does not include a positive electrode active material layer 23. The current collector 12 of the positive terminal electrode 36 is located at one end in the stacking direction X of the stacked body 10a. The current collector 12 of the negative terminal electrode 37 is located at the other end in the stacking direction X of the stacked body 10a.

The second surface 12b of the current collector 12 of the positive terminal electrode 36 forms a first outer surface 32a, which is an outer surface located at one end in the stacking direction X of the stacked body 10a. The first surface 12a of the current collector 12 of the negative terminal electrode 37 forms a second outer surface 22a, which is an outer surface located at the other end in the stacking direction X of the stacked body 10a. The first outer surface 32a and the second outer surface 22a are flat surfaces extending to be orthogonal to the stacking direction X.

### Internal Spaces

An internal space S is located between any two of the current collectors 12 adjacent to each other in the stacking direction X. Each internal space S is defined by a positive electrode current collector 22 and a negative electrode current collector 32 that are adjacent to each other in the stacking direction X, and the sealing body 15. One internal space S is defined for each pair of the positive electrode current collector 22 and the negative electrode current collector 32 that are adjacent to each other in the stacking direction X. Each internal space S accommodates a positive electrode active material layer 23, a negative electrode active material layer 33, a separator 35, and liquid electrolyte (not shown). Examples of the liquid electrolyte include an electrolyte solution containing a nonaqueous solvent and an electrolyte salt dissolved in the nonaqueous solvent.

### Positive Electrode Energization Plate and Negative Electrode Energization Plate

The power storage device 10 includes a positive electrode energization plate 38 and a negative electrode energization plate 39. The positive electrode energization plate 38 and the negative electrode energization plate 39 are formed of a material having a good conductivity. The material forming the positive electrode energization plate 38 and the negative electrode energization plate 39, may be, for example, a metal material such as aluminum, copper, or stainless steel. The stacked body 10a is disposed between the positive electrode energization plate 38 and the negative electrode energization plate 39 in the stacking direction X.

The positive electrode energization plate 38 is electrically connected to the first outer surface 32a of the stacked body 10a. The negative electrode energization plate 39 is electrically connected to the second outer surface 22a of the stacked body 10a. Each of the positive electrode energization plate 38 and the negative electrode energization plate 39 is provided with a terminal (not shown). The power storage device 10 performs charging and discharging through terminals provided on the positive electrode energization plate 38 and the negative electrode energization plate 39.

### Sealing Body

The sealing body 15 is disposed to surround the multiple electrodes 11, the positive electrode active material layer 23 of the positive terminal electrode 36, and the negative electrode active material layer 33 of the negative terminal electrode 37 when viewed in the stacking direction X. Hereinafter, the electrodes 11, the positive terminal electrode 36, and the negative terminal electrode 37 may be simply referred to as electrodes 11a. The sealing body 15 provides a seal between any two of the current collectors 12 that are adjacent to each other in the stacking direction X.

As shown in Fig. 2, the sealing body 15 includes multiple seal members 40 welded to the respective current collectors 12 of the electrodes 11a. That is, each of the electrodes 11a includes a seal member 40. The seal members 40 are made of plastic. Each of the seal members 40 includes two first seal sections 41 and a second seal section 42. The first seal sections 41 are each disposed between the first surface 12a of the current collector 12 of one of two electrodes 11a adjacent to each other in the stacking direction X and the second surface 12b of the current collector 12 of the other electrode 11a. In other words, the first seal sections 41 are disposed inside the outer edges 12e of the current collectors 12 when viewed in the stacking direction X. Two first seal sections 41 are disposed on the opposite sides in the stacking direction X of each current collector 12. The two first seal sections 41 are welded to the first surface 12a and the second surface 12b of the current collector 12. The two first seal sections 41 are welded to the first surface 12a and the second surface 12b via first welding parts 41a. The two first seal sections 41 are respectively welded to the positive electrode uncoated portion 12c and the negative electrode uncoated portion 12d. In other words, the seal members 40 are respectively welded to the positive electrode uncoated portion 12c and the negative electrode uncoated portion 12d.

The first seal sections 41 located on the positive electrode uncoated portions 12c are disposed to surround the positive electrode active material layers 23. The first seal sections 41 located on the negative electrode uncoated portions 12d are disposed to surround the negative electrode active material layers 33. Each first seal section 41 has the shape of a rectangular frame.

The first seal section 41 located on each positive electrode uncoated portion 12c is separated from the corresponding positive electrode active material layer 23. Thus, a part of the positive electrode uncoated portion 12c serves as a positive electrode exposed portion 17, in which neither the positive electrode active material layer 23 nor the first seal section 41 is disposed. The positive electrode exposed portion 17 is a part of the positive electrode uncoated portion 12c in which neither the positive electrode active material layer 23 nor the seal member 40 is disposed. The positive electrode exposed portion 17 is located between the positive electrode active material layer 23 and the seal member 40. The positive electrode exposed portion 17 has the shape of a rectangular frame in plan view. The positive electrode exposed portion 17 is located so as to surround the positive electrode active material layer 23 from the outside, and is located inside the first seal section 41 located on the positive electrode uncoated portion 12c.

The first seal section 41 located on each negative electrode uncoated portion 12d is separated from the corresponding negative electrode active material layer 33. Thus, a part of the negative electrode uncoated portion 12d serves as a negative electrode exposed portion 18, in which neither the negative electrode active material layer 33 nor the first seal section 41 is disposed. The negative electrode exposed portion 18 is a part of the negative electrode uncoated portion 12d in which neither the negative electrode active material layer 33 nor the seal member 40 is disposed. The negative electrode exposed portion 18 is located between the negative electrode active material layer 33 and the seal member 40. The negative electrode exposed portion 18 has the shape of a rectangular frame in plan view. The negative electrode exposed portion 18 is located so as to surround the negative electrode active material layer 33 from the outside, and is located inside the first seal section 41 located on the negative electrode uncoated portion 12d.

The second seal sections 42 extend outward beyond the outer edges 12e of the current collectors 12 from the first seal sections 41. Specifically, the second seal sections 42 are located on the outer side of the outer edges 12e of the current collectors 12 when viewed in the stacking direction X. The second seal sections 42 are disposed to surround the current collectors 12 when viewed in the stacking direction X. Each second seal section 42 has the shape of a rectangular frame. Each second seal section 42 covers an end face connecting the first surface 12a and the second surface 12b of the corresponding current collector 12. Each second seal section 42 also connects the outer periphery of the first seal section 41 located on the corresponding positive electrode uncoated portion 12c to the outer periphery of the first seal section 41 located on the corresponding negative electrode uncoated portion 12d.

The sealing body 15 includes multiple spacers 50. The spacers 50 are made of plastic. Each spacer 50 is located between two of the current collectors 12 that are adjacent to each other in the stacking direction X, and is sandwiched between the first seal section 41 located on a positive electrode uncoated portion 12c and the first seal section 41 located on a negative electrode uncoated portion 12d. Accordingly, each spacer 50 is located between two of the current collectors 12 that are adjacent to each other in the stacking direction X and is sandwiched between the corresponding first seal sections 41. The spacers 50 are disposed to surround the positive electrode active material layers 23 and the negative electrode active material layers 33 when viewed in the stacking direction X. Each spacer 50 has the shape of a rectangular frame.

In the present embodiment, the opposite surfaces of each spacer 50 in the stacking direction X are not welded to the first seal sections 41. The opposite surfaces of the spacer 50 in the stacking direction X may contact or be separate from the first seal sections 41.

Each set of the first seal sections 41 and the corresponding spacer 50 is located between two of the current collectors 12 that are adjacent to each other in the stacking direction X. Thus, each set of the first seal sections 41 and the corresponding spacer 50 maintains the distance between the positive electrode current collector 22 of one of the two current collectors 12 adjacent to each other in the stacking direction X and the negative electrode current collector 32 of the other current collector 12, so as to insulate the positive electrode current collector 22 and the negative electrode current collector 32 from each other. In this manner, the seal members 40 and the spacers 50 prevent the occurrence of short circuits between each positive electrode current collector 22 and the corresponding negative electrode current collector 32.

The sealing body 15 includes a sealing portion 16. The sealing portion 16 is made of plastic. The sealing portion 16 has a tubular shape extending in the stacking direction X. The sealing portion 16 is located so as to surround the seal members 40, the spacers 50, and the current collectors 12 from the outside of the stacked body 10a.

The sealing portion 16 seals the internal spaces S each located between two of the current collectors 12 adjacent to each other in the stacking direction X. The sealing portion 16 prevents water from entering the internal spaces S from the outside of the power storage device 10. The sealing portion 16 prevents leakage of the liquid electrolyte accommodated in the internal spaces S to the outside of the power storage device 10.

### Method for Manufacturing Electrode and Power Storage Device

Next, a method for manufacturing the electrode 11 and the power storage device 10 will be described. Although the following description will be made using the electrode 11, the positive terminal electrode 36 and the negative terminal electrode 37 are manufactured in the same manner.

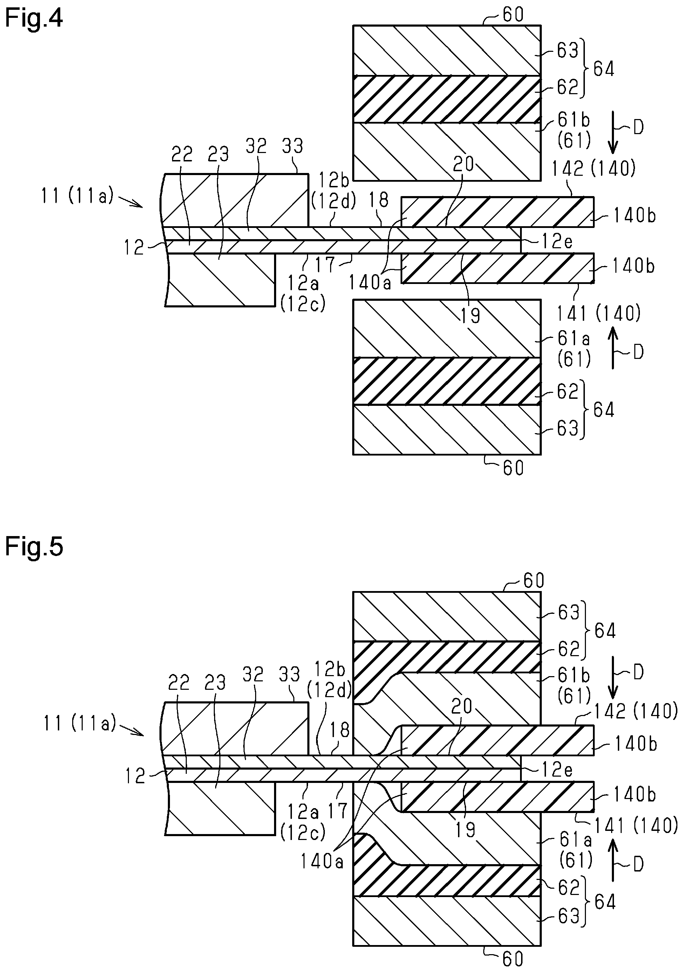

As shown in Fig. 4, when the electrode 11 is manufactured, seal components 140 are disposed on a current collector 12 having a positive electrode active material layer 23 and a negative electrode active material layer 33. Next, in the method for manufacturing the electrode 11, the seal components 140 are welded, using the pair of jigs 60, to the current collector 12, which has the positive electrode active material layer 23 and the negative electrode active material layer 33 respectively on the opposite surfaces. The seal components 140 are welded, using the jigs 60, to the positive electrode uncoated portion 12c and the negative electrode uncoated portion 12d. The manufactured electrode 11 includes the current collector 12, which includes the active material layers on the opposite surfaces, and the seal components 140, which are welded to the positive electrode uncoated portion 12c and the negative electrode uncoated portion 12d of the current collector 12.

The seal components 140 are precursors of the seal members 40 and the sealing portion 16. The seal components 140 are disposed on each of the positive electrode uncoated portion 12c and the negative electrode uncoated portion 12d of the current collector 12. The current collector 12 is sandwiched between the two seal components 140 from the opposite sides in the thickness direction of the current collector 12. The seal components 140 protrude outward from the current collector 12 beyond the outer edge 12e of the current collector 12. In other words, each seal component 140 is disposed on the current collector 12 so as to have both a part overlapping with the current collector 12 and a part not overlapping with the current collector 12 when viewed from the direction in which the current collector 12 and the seal components 140 are stacked.

The seal component 140 disposed on the positive electrode uncoated portion 12c is also referred to as a first seal component 141. The first seal component 141 is positioned to surround the positive electrode active material layer 23. The seal component 140 disposed on the negative electrode uncoated portion 12d is also referred to as a second seal component 142. The second seal component 142 is positioned to surround the negative electrode active material layer 33. In other words, the seal components 140 are disposed on the opposite surfaces of the current collector 12 to surround the positive electrode active material layer 23 and the negative electrode active material layer 33.

The seal components 140 each include a protruding portion 140b that protrudes from the outer edge 12e of the current collector 12. The protruding portion 140b of the first seal component 141 and the protruding portion 140b of the second seal component 142 are separated from each other. A part of each seal component 140 that is disposed on an uncoated portion of the current collector 12 is referred to as a main body 140a. Each of the first seal component 141 and the second seal component 142 includes a main body 140a and a protruding portion 140b. The main body 140a of the first seal component 141 is a part of the first seal component 141 that is located on the positive electrode uncoated portion 12c. The main body 140a of the second seal component 142 is a part of the second seal component 142 that is located on the negative electrode uncoated portion 12d. The protruding portions 140b of the first seal component 141 and the second seal component 142 each extend from the corresponding main body 140a. The protruding portion 140b of the first seal component 141 is a part of the first seal component 141 that is not located on the positive electrode uncoated portion 12c. The protruding portion 140b of the second seal component 142 is a part of the second seal component 142 that is not located on the negative electrode uncoated portion 12d.

The main body 140a of the first seal component 141 is separated from the positive electrode active material layer 23. Thus, a part of the positive electrode uncoated portion 12c serves as a positive electrode exposed portion 17, in which neither the positive electrode active material layer 23 nor the first seal component 141 is disposed. The positive electrode exposed portion 17 has the shape of a frame in plan view. In plan view, the positive electrode exposed portion 17 is located outside the positive electrode active material layer 23 and inside the first seal component 141.

The main body 140a of the second seal component 142 is separated from the negative electrode active material layer 33. Thus, a part of the negative electrode uncoated portion 12d serves as a negative electrode exposed portion 18, in which neither the negative electrode active material layer 33 nor the second seal component 142 is disposed. The negative electrode exposed portion 18 has the shape of a frame in plan view. In plan view, the negative electrode exposed portion 18 is located outside the negative electrode active material layer 33 and inside the second seal component 142.

In the present embodiment, the positive electrode exposed portion 17 and the negative electrode exposed portion 18 are parts of the positive electrode uncoated portion 12c and the negative electrode uncoated portion 12d in which neither the active material layer nor the seal component 140 is disposed. Each of the positive electrode exposed portion 17 and the negative electrode exposed portion 18 is also a part located between the active material layer and the seal component 140. The positive electrode exposed portion 17 and the negative electrode exposed portion 18 of the present embodiment correspond to exposed portions.

A part of the positive electrode uncoated portion 12c in which the seal component 140 is disposed is referred to as a positive electrode covered portion 19. In plan view, the positive electrode covered portion 19 has the shape of a frame and is located outside the positive electrode exposed portion 17. The positive electrode uncoated portion 12c includes the positive electrode exposed portion 17 and the positive electrode covered portion 19. The positive electrode exposed portion 17 and the positive electrode covered portion 19 are adjacent to each other.

A part of the negative electrode uncoated portion 12d in which the seal component 140 is disposed is referred to as a negative electrode covered portion 20. In plan view, the negative electrode covered portion 20 has the shape of a frame and is located outside the negative electrode exposed portion 18. The negative electrode uncoated portion 12d includes the negative electrode exposed portion 18 and the negative electrode covered portion 20. The negative electrode exposed portion 18 and the negative electrode covered portion 20 are adjacent to each other.

As shown in Fig. 3, the seal components 140 are disposed so as to extend along the sides 12f of the current collector 12. Specifically, the seal components 140 are disposed so as to extend along each of the two long sides 12h and the two short sides 12g of the current collector 12. The seal components 140 each include four seal component pieces that are disposed along the four sides 12f, respectively, and are separate from each other. Each of the seal component pieces has the shape of a strip having a longitudinal direction along the corresponding side 12f and a transverse direction in a direction intersecting the corresponding side 12f. One seal component piece of the first seal component 141 and one seal component piece of the second seal component 142 are arranged along one side 12f.

The seal component pieces may be arranged such that the ends in the longitudinal direction of the seal component pieces overlap with each other, or may be arranged such that the ends do not overlap with each other. In the present embodiment, the ends in the longitudinal direction of the seal component pieces arranged along the long sides 12h and the ends in the longitudinal direction of the seal component pieces arranged along the short sides 12g overlap with each other. In the seal component 140 disposed on each of the first surface 12a and the second surface 12b, the seal component pieces disposed along the long sides 12h and the seal component pieces disposed along the short sides 12g are disposed so as to form the shape of a frame. The negative electrode active material layer 33 is surrounded by the second seal component 142, which includes seal component pieces arranged along the long sides 12h and seal component pieces arranged along the short sides 12g. Although not illustrated in Fig. 3, the positive electrode active material layer 23 is surrounded by the first seal component 141, which includes seal component pieces arranged along the long sides 12h and seal component pieces arranged along the short sides 12g.

In the present embodiment, the two jigs 60 are used to weld the seal component pieces arranged along the two long sides 12h of the current collector 12 to the opposite surfaces of the current collector 12. Thereafter, the two jigs 60 are used to weld the seal component pieces arranged along the two short sides 12g of the current collector 12 to the opposite surfaces of the current collector 12. A long-side welding process for welding the seal component pieces arranged along the two long sides 12h of the current collector 12 to the opposite surfaces of the current collector 12 may be simultaneously performed at the two sides or may be performed at one side at a time. Also, a short-side welding process for welding the seal component pieces arranged along the two short sides 12g of the current collector 12 to the opposite surfaces of the current collector 12 may be simultaneously performed at the two sides or may be performed at one side at a time. Further, either of the long-side welding process or the short-side welding process may be performed first.

As shown in Fig. 4, each of the two jigs 60 includes a heater portion 61 and a pressing portion 64. The heater portion 61 is, for example, a metal plate that incorporates a heating wire (not shown). By adjusting the amount of current flowing through the heating wire, it is possible to switch the heater portion 61 between heating and stopping the heating. The heater portion 61 is designed to heat the seal component 140 and is deformable. The pressing portion 64 presses the heater portion 61 against the seal component 140 so that the seal component 140 is pressed against the current collector 12. Hereinafter, a direction in which the pressing portion 64 presses the seal component 140 is referred to as a pressing direction D. Specifically, the pressing direction D is a direction orthogonal to the first surface 12a and the second surface 12b. The pressing direction D is also a direction from the jig 60 towards the seal component 140. The pressing portion 64 includes a rubber portion 62 and a base portion 63. The rubber portion 62 is made of, for example, silicone rubber. The rubber portion 62 is positioned to overlap with the heater portion 61 in the pressing direction D. In other words, the pressing portion 64 is positioned to overlap with the heater portion 61 in the pressing direction D. As a result, the pressing portion 64 is positioned alongside the heater portion 61 and the seal component 140 in the pressing direction D. The heater portion 61 is fixed to the rubber portion 62. The rubber portion 62 is compressively deformable.

The base portion 63 is made of, for example, metal. The rubber portion 62 is located between the base portion 63 and the heater portion 61. Thus, the rubber portion 62 insulates the base portion 63 and the heater portion 61 from each other. The rubber portion 62 suppresses heat transfer from the heater portion 61 to the base portion 63. The rubber portion 62 is fixed to the base portion 63. Thus, the heater portion 61 and the pressing portion 64 are integrated with each other. An operator operates an operation device (not shown) to change the position of the base portion 63 with respect to a seal component and a current collector foil, which are welding targets. The base portion 63 is configured to be movable with respect to the welding targets. When the position of the base portion 63 with respect to the welding targets is changed, the heater portion 61 and the rubber portion 62, which are integrated with the base portion 63, are moved integrally with the base portion 63.

When the seal components 140 are welded to the current collector 12, the two jigs 60 are provided at positions facing the seal components 140 on the opposite sides of the current collector 12 in the thickness direction. The thickness direction of the current collector 12 agrees with the pressing direction D. Hereinafter, the heater portion 61 disposed on the side facing the first surface 12a of the current collector 12 is also referred to as a first heater portion 61a, and the heater portion 61 disposed on the side facing the second surface 12b of the current collector 12 is also referred to as a second heater portion 61b. The heater portions 61 are provided at positions away from the positive electrode active material layer 23 and the negative electrode active material layer 33 in a direction orthogonal to the pressing direction D. The first heater portion 61a faces the positive electrode exposed portion 17 and the first seal component 141, and the second heater portion 61b faces the negative electrode exposed portion 18 and the second seal component 142. The two jigs 60 are moved so as to approach each other with the seal components 140 and the current collector 12 interposed therebetween as the base portions 63 of the jigs 60 are each moved to approach the opposed seal component 140.

When the heater portions 61 are moved to specified positions as shown in Fig. 5, the movement of the jigs 60 is stopped by stopping the movement of the base portions 63. At this time, the first heater portion 61a is in contact with the positive electrode exposed portion 17 and the first seal component 141. The second heater portion 61b is in contact with the negative electrode exposed portion 18 and the second seal component 142.

The first heater portion 61a is pressed against the main body 140a of the first seal component 141 and the positive electrode exposed portion 17. The second heater portion 61b is pressed against the main body 140a of the second seal component 142 and the negative electrode exposed portion 18. Further, the first heater portion 61a is pressed against a portion that is a part of the protruding portion 140b of the first seal component 141 and is connected to the main body 140a. The second heater portion 61b is pressed against a portion that is a part of the protruding portion 140b of the second seal component 142 and is connected to the main body 140a. In each of the first seal component 141 and the second seal component 142, a part of the protruding portion 140b that is away from the main body 140a is not pressed by the heater portion 61. That is, in the present embodiment, each heater portion 61 is pressed against the corresponding seal component 140, except for a part of the protruding portion 140b. Further, in the present embodiment, the two jigs 60 are moved to approach each other, so that the seal components 140 and the current collector 12 are sandwiched between the jigs 60. In this state, the heater portions of the jigs are pressed against the seal components 140 and the exposed portions. Therefore, each of the jigs 60 also functions as a support member that receives the pressing force of the other jig.

The first heater portion 61a comes into contact with the first seal component 141 and the positive electrode exposed portion 17 while being deformed along the positive electrode exposed portion 17 and the first seal component 141. The second heater portion 61b comes into contact with the second seal component 142 and the negative electrode exposed portion 18 while being deformed along the negative electrode exposed portion 18 and the second seal component 142. The pressing portions 64 press the heater portions 61 against the seal components 140. As the heater portions 61 are pressed against the seal components 140, the rubber portions 62 is compressively deformed in the pressing direction D. Specifically, a part of each rubber portion 62 that overlaps with a part of the corresponding heater portions 61 that is in contact with the corresponding seal component 140 is compressively deformed to a greater extent than a part of the rubber portion 62 that overlaps with a part of the corresponding heater portion 61 that is in contact with the corresponding one of the positive electrode exposed portion 17 and the negative electrode exposed portion 18. The rubber portion 62 is compressively deformed while the movement of the rubber portion 62 is limited by the base portion 63. In this manner, when the heater portion 61 is pressed against the seal component 140, the pressing portion 64 is compressively deformed in the pressing direction D. The pressing portion 64 that presses the first heater portion 61a can apply a uniform surface pressure to the first seal component 141 and the positive electrode exposed portion 17, and the pressing portion 64 that presses the second heater portion 61b can apply a uniform surface pressure to the second seal component 142 and the negative electrode exposed portion 18.

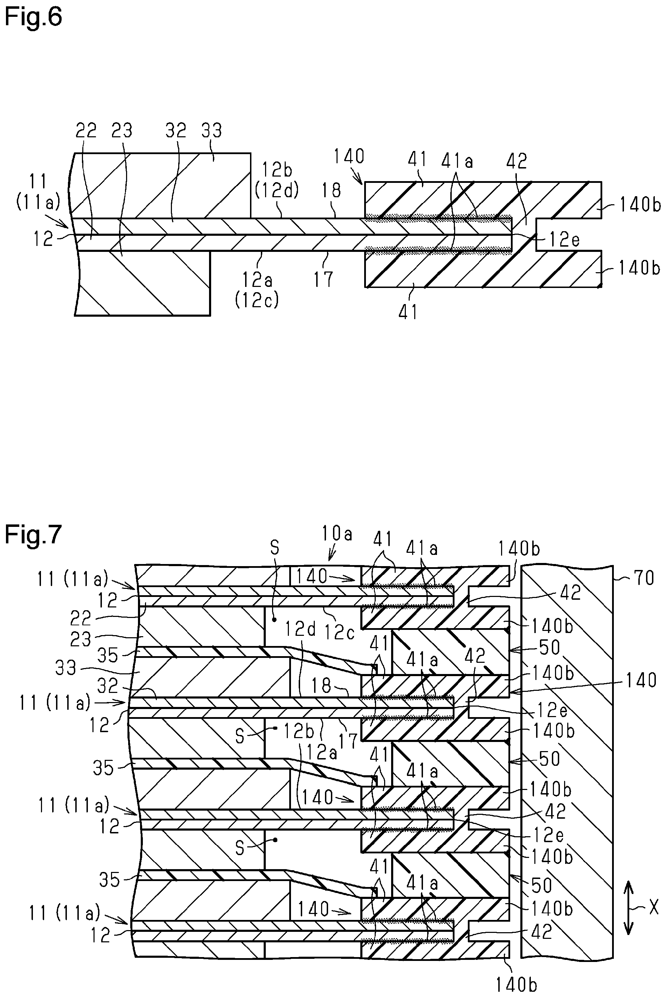

The heater portions 61 generate heat in a state in which the heater portions 61 are in contact with the seal components 140, the positive electrode exposed portion 17, and the negative electrode exposed portion 18 as shown in Figs. 5 and 6. The heater portions 61 may start generating heat before or after the heater portions 61 come into contact with the seal components 140, the positive electrode exposed portion 17, and the negative electrode exposed portion 18. Pressure heating is performed in which the heater portions 61 generate heat in a state in which the heater portions 61 are pressed against the first and second seal components 141, 142 (the seal components 140 disposed on the uncoated portions) and the positive and negative electrode exposed portions 17, 18, while the heater portions 61 are deformed to conform to the compressive deformation of the pressing portions 64. The pressure heating is performed, using the two jigs 60, on the seal components 140 (disposed on the uncoated portions on the opposite surfaces of the current collector 12) and on the positive and negative electrode exposed portions 17, 18 (disposed on the opposite surfaces of the current collector 12), thereby welding the seal components 140 to the opposite surfaces of the current collector 12. The pressure heating of the positive and negative electrode exposed portions 17, 18 by the heater portions 61 and the pressure heating of the seal components 140 by the heater portions 61 are started simultaneously. Thus, the seal components 140 are welded to the current collector 12. As a result, the first seal sections 41 welded to the current collector 12 are formed.

The heater portions 61 of the jigs 60 generate heat in a state in which the heater portions 61 are pressed against the respective main bodies 140a of the first seal component 141 and the second seal component 142. Thus, the main body 140a of the first seal component 141 is welded to the positive electrode covered portion 19. In addition, the main body 140a of the second seal component 142 is welded to the negative electrode covered portion 20. A welding part 41a is formed at each of the boundary between the main body 140a of the first seal component 141 and the positive electrode covered portion 19 and the boundary between the main body 140a of the second seal component 142 and the negative electrode covered portion 20. By welding the seal components 140 to the current collector 12, the electrode 11 is formed in which the current collector 12 and the seal components 140 are integrated.

Further, the heater portions 61 of the jigs 60 generate heat in a state in which the heater portions 61 are pressed against parts of the protruding portions 140b of the first and second seal components 141, 142 that are connected to the main bodies 140a. As a result, in the first and second seal components 141, 142, the parts of the protruding portions 140b subjected to pressure heating by the heater portions 61 are melted and connected to each other, so that the second seal section 42 is formed. After the second seal section 42 is formed, the first seal component 141 and the second seal component 142 are integrated as a single seal component 140.

Parts of the protruding portions 140b away from the main bodies 140a are not subjected to the pressure heating by the heater portions 61, and thus are not melted. In the present embodiment, each heater portion 61 generates heat while being pressed against the corresponding seal component 140 except for a part of the protruding portion 140b.

When the welding parts 41a are formed, the process of welding the seal components 140 to the current collector 12 by the jigs 60 is finished. The process of welding the seal components 140 to the current collector 12 by the jigs 60 is terminated by stopping the heat generation by the heater portions 61. The pressure heating of the positive and negative electrode exposed portions 17, 18 by the heater portions 61 and the pressure heating of the seal components 140 by the heater portions 61 are ended simultaneously. It is preferable that the seal components 140 and the current collector 12 be held by the jigs 60 until the welding parts 41a are completely cooled. However, the jigs 60 may be moved such that the heater portions 61 are separated from the seal components 140 when the heat generation by the heater portions 61 is stopped.

When the welding process of the seal components 140 to the current collector 12 by the jigs 60 is ended, the welding parts 41a are cooled, and thus the welding of the seal components 140 to the current collector 12 is completed. Such welding of the seal components 140 to the current collector 12 is performed on the seal components 140 disposed on all the sides 12f of the current collector 12. The welding of the seal components 140 to the current collector 12 by the jigs 60 is repeated to sequentially form the electrode 11, in which the current collector 12 and the seal components 140 are integrated.

As shown in Fig. 7, the electrodes 11a integrated with the seal components 140, the separators 35, and the spacers 50 are sequentially stacked in the stacking direction X. A separator 35 is interposed between the positive electrode active material layer 23 of one of two electrodes 11a adjacent to each other in the stacking direction X and the negative electrode active material layer 33 of the other electrode 11a. As a result, the stacked body 10a is formed. A spacer 50 is interposed between the seal component 140 integrated with one of two electrodes 11a adjacent to each other in the stacking direction X and the seal component 140 integrated with the other electrode 11a.

Next, the seal components 140 and the spacers 50 are welded together. The seal components 140 and the spacers 50 may be welded together by non-contact welding using a welding jig 70, for example. The welding jig 70 is, for example, an infrared heater. In this case, the welding jig 70 is disposed outside the stacked body 10a to be opposed to and separated from the seal components 140 and the spacers 50 in a direction intersecting the stacking direction X. The protruding portions 140b of the seal components 140 and parts of the spacers 50 are heated and melted by the infrared rays irradiated from the welding jig 70.

When the spacers 50 and the protruding portions 140b are melted by the welding jig 70, parts of the spacers 50 overlapping with the protruding portions 140b in the stacking direction X and the protruding portions 140b are welded to each other, as shown in Figs. 2 and 7. As a result, the sealing portion 16 is formed. Parts of the seal components 140 that do not form the sealing portion 16 correspond to the seal members 40 of the power storage device 10.

### Operation and Advantages

The above-described embodiment has the following operation and advantages.
(1) In the method for manufacturing the electrode 11 of the present embodiment, pressure heating is performed on the seal component 140 disposed on the positive electrode uncoated portion 12c of the current collector 12, and on the positive electrode exposed portion 17 (a part of the positive electrode uncoated portion 12c of the current collector 12 in which neither the positive electrode active material layer 23 nor and the seal component 140 is disposed). Also, pressure heating is performed on the seal component 140 disposed on the negative electrode uncoated portion 12d of the current collector 12, and on the negative electrode exposed portion 18 (a part of the negative electrode uncoated portion 12d of the current collector 12 in which neither the negative electrode active material layer 33 nor and the seal component 140 is disposed). Specifically, while each heater portion 61 is deformed such that the heater portion 61 conforms to compressive deformation of the corresponding pressing portion 64, the heater portion 61 is caused to generate heat in a state of being pressed against the corresponding seal component 140 and the corresponding one of the positive electrode uncoated portion 12c and the negative electrode uncoated portion 12d. The seal components 140 are thus welded to the current collector 12. The amount of thermal expansion of the current collector 12 due to heat transfer from the heater portions 61 is larger than that in a case in which pressure heating is performed only on the seal components 140 without performing pressure heating on the positive and negative electrode exposed portions 17, 18. Therefore, since the difference in the amount of thermal expansion between the seal components 140 and the current collector 12 is reduced, the difference in the amount of shrinkage between the seal components 140 and the current collector 12 due to cooling of the current collector 12 and the seal components 140 is reduced. Therefore, when the seal components 140 are welded to the current collector 12, the current collector 12 is prevented from wrinkling due to the difference in the amount of shrinkage between the seal components 140 and the current collector 12.
(2) Each of the two jigs 60 includes the heater portion 61 and the pressing portion 64. Pressure heating is performed, using the two jigs 60, on the seal components 140 disposed on the positive and negative electrode uncoated portions 12c, 12d (the uncoated portions on the opposite surfaces of the current collector 12) and the positive and negative electrode exposed portions 17, 18 (the exposed portions on the opposite surfaces of the current collector 12). The seal components 140 are thus welded to the opposite surfaces of the current collector 12. Therefore, the heater portions 61 generate heat in a state in which the heater portions 61 are pressed against the seal components 140 and the exposed portions, while the heater portions 61 are deformed to conform to the compressive deformation of the pressing portions 64 on both the first surface 12a and the second surface 12b of the current collector 12. As a result, the seal components 140 are welded to the positive electrode uncoated portion 12c and the negative electrode uncoated portion 12d, which are uncoated portions on the opposite surfaces of the current collector 12, by the heater portions 61 and the pressing portions 64.
(3) The seal components 140 each include the main body 140a disposed on the positive electrode uncoated portion 12c or the negative electrode uncoated portion 12d of the current collector 12, and the protruding portion 140b, which extends from the main body 140a and protrudes beyond the outer edge 12e of the current collector 12. Each heater portion 61 generates heat while being pressed against the corresponding seal component 140 except for a part of the protruding portion 140b. Therefore, the seal components 140 are welded to the current collector 12 by causing the heater portions 61 to generate heat in a state in which the heater portions 61 are pressed against the main body 140a. In this manner, the seal components 140 are welded to the current collector 12 without performing pressure heating on the entire protruding portion 140b by the heater portions 61. Therefore, the amount of thermal expansion of the seal components 140 is reduced as compared to a case in which the entire seal components 140 are subjected to pressure heating by the heater portion 61. This reduces the amount of shrinkage of the seal components 140 due to cooling of the seal component 140. Since the difference in the amount of shrinkage between the seal components 140 and the current collector 12 is further reduced, the occurrence of wrinkles in the current collector 12 is further suppressed.

### Modifications

The above-described embodiment may be modified as follows. The above-described embodiment and the following modifications can be combined as long as the combined modifications remain technically consistent with each other.

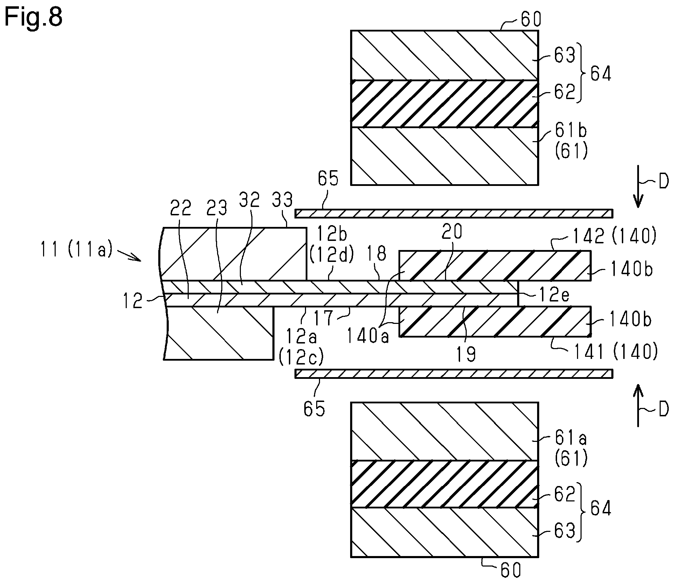

As shown in Fig. 8, a sheet 65 may be disposed between each heater portion 61 and the set of the current collector 12 and the seal components 140. In a state before the two jigs 60 sandwich the seal components 140 and the current collector 12, the sheets 65 may be disposed so as to be separated from the heater portions 61 and from the current collector 12 and the corresponding seal components 140. The sheets 65 are, for example, belt-shaped members extending in the longitudinal direction of the seal component pieces. Each sheet 65 may be held in a state of receiving a specified tension in the longitudinal direction by a holding mechanism (not shown). When the seal components 140 are welded to the current collector 12, the seal components 140 may be heated in a state in which the heater portions 61 are pressed against the current collector 12 and the seal components 140 via the sheets 65. This prevents the melted seal components 140 from adhering to the heating surfaces of the heater portions 61. In addition, by moving the jigs 60 so that the heater portions 61 are separated from the seal components 140, the sheets 65 are separated from the seal components 140 by the tension applied to the sheets 65.

The sheets 65 may be, for example, obtained by coating the surfaces of a base sheet with a fluoropolymer having heat resistance, non-stick property, and slipperiness. The sheets 65 may be, for example, formed by impregnating heat-resistant base sheets with a fluorine compound such as polytetrafluoroethylene. The illustrated sheets 65 are made of, for example, glass cloth impregnated with a fluorine compound. The glass cloth is made of glass fibers having a higher thermal conductivity than the fluorine compound. Thus, by using the sheets 65, in which the base sheets are formed of glass cloth, it is possible to reliably perform heat transfer from the heater portions 61 to the seal components 140. The sheets 65 may be, for example, plastic sheets obtained by molding a plastic containing the fluorine compound into the shape of sheet.

When each seal component 140 is disposed so as to extend along the sides 12f of the current collector 12, the seal component 140 may be temporarily fixed (temporarily welded) to the current collector 12 by performing spot welding (point welding) with ultrasonic waves, heat, or the like. This prevents the seal component 140 from being displaced from a specified position until welding using the heater portion 61 is performed.

The seal components 140 may be made from sealing material cut from an elongated strip-shaped sealing substrate. In such an elongated strip-shaped seal substrate, the coefficient of linear expansion of the seal substrate in the transverse direction (TD) of the seal substrate, is smaller than the coefficient of linear expansion of the seal substrate the longitudinal direction (MD) of the seal substrate. Taking this point into consideration, the seal component pieces of the seal components 140 are cut out from the sealing substrate in such a way that the TD of the sealing substrate agrees with the longitudinal direction of the seal component pieces. The seal component pieces may then be placed on the current collector 12 with the longitudinal direction of the seal component pieces being along the sides 12f of the current collector 12. In this case, the amount of thermal shrinkage of the seal components 140 during welding to the current collector 12 is reduced as compared with a case in which the seal component pieces are cut out from a seal substrate such that the MD of the seal substrate and the longitudinal direction of the seal component pieces agree with each other.

After welding the seal component pieces along the two short sides 12g of the current collector 12, the seal component pieces along the two long sides 12h may be welded to the current collector 12. The seal component pieces arranged along the four sides 12f of the current collector 12 may be welded to the current collector 12 sequentially or simultaneously.

The seal component pieces arranged along the four sides 12f of the current collector 12 may be integrally formed. In this case, the seal component 140 is a frame-shaped body formed of four integrated seal component pieces.

Each pressing portion 64 may include a plastic portion instead of the rubber portion 62. The plastic portion in this case is formed of, for example, a fluoropolymer such as polytetrafluoroethylene. The plastic portion may be positioned between the heater portion 61 and the seal component 140 in the pressing direction D. The plastic portion serving as the pressing portion 64 is positioned alongside the heater portion 61 and the seal component 140 in the pressing direction D. In this case as well, the heater portions 61 generate heat in a state in which the heater portions 61 are pressed against the seal components 140 (disposed on the positive electrode uncoated portion 12c and the negative electrode uncoated portion 12d), the positive electrode exposed portion 17, and the negative electrode exposed portion 18, while the heater portions 61 are deformed to conform to the compressive deformation of the plastic portions.

The seal member 40 may be provided on only one of the first surface 12a and the second surface 12b of the current collector 12. Further, welding may be performed in a state in which the seal component 140 is disposed on only one of the first surface 12a and the second surface 12b of the current collector 12. In this case, instead of the two jigs 60, the jigs may include a first jig including the heater portion 61 and a second jig including the pressing portion 64. For example, when the seal member 40 is provided on the first surface 12a, the first jig is disposed so as to face the seal component 140 disposed on the positive electrode uncoated portion 12c and the positive electrode exposed portion 17. The second jig is disposed so as to face a part of the negative electrode uncoated portion 12d that overlaps, in the pressing direction D, with the seal component 140 on the positive electrode uncoated portion 12c and the positive electrode exposed portion 17. In this case, the pressing portion 64 is positioned alongside the heater portion 61 and the seal component 140 in the pressing direction D. In this case as well, the heater portion 61 generates heat in a state in which the heater portion 61 is pressed against the seal component 140 (disposed on the positive electrode uncoated portion 12c), and the positive electrode exposed portion 17, while the heater portion 61 is deformed to conform to the compressive deformation of the pressing portion 64.

The seal component 140 disposed on the positive electrode uncoated portion 12c of the current collector 12 and the seal component 140 disposed on the negative electrode uncoated portion 12d may be an integrated component. In this case, the seal component 140 includes, for example, a part located along the outer edge 12e of the current collector 12. The part located along the outer edge 12e connects a part of the seal component 140 located on the positive electrode uncoated portion 12c to a part of the seal component 140 located on the negative electrode uncoated portion 12d, thereby integrating the seal components 140.

The time for starting the pressure heating of the positive and negative electrode exposed portions 17, 18 by the heater portions 61 may be shifted from the time for starting the pressure heating of the seal components 140 by the heater portions 61. Even in this case, the same advantages as those of the above-described embodiment are obtained by simultaneously performing the pressure heating of the positive electrode exposed portion 17 and the negative electrode exposed portion 18 by the heater portions 61 and the pressure heating of the seal component 140 by the heater portions 61. It is preferable that the pressure heating of the positive and negative electrode exposed portions 17, 18 by the heater portions 61 and the pressure heating of the seal components 140 by the heater portions 61 be ended simultaneously.

The part of each seal component 140 that is heated in a state in which the heater portion 61 is pressed against the seal component 140 may be at least a part of the seal component 140, and the range of the part may be changed. For example, when the seal component 140 is welded to the current collector 12, heating may be performed in a state in which the heater portion 61 is pressed against the seal component 140 except for the entire protruding portion 140b. In this case, the second seal section 42 does not necessarily need to be formed after the seal component 140 is welded to the current collector 12.

The protruding portion 140b may be omitted from the seal component 140. In this case, the seal component 140 is formed of the main body 140a. The sealing portion 16 may be formed using a plastic different from that of the seal components 140.

### REFERENCE SIGNS LIST

D) Pressing Direction; 11, 11a) Electrodes; 12) Current Collectors; 12a) First Surface; 12b) Second Surface; 12e) Outer Edge; 23) Positive Electrode Active Material Layer; 33) Negative Electrode Active Material Layer; 60) Jigs; 61) Heater Portions; 64) Pressing Portions; 140) Seal Components; 140a) Main Body; 140b) Protruding Portions

## Claims

1. A method for manufacturing an electrode (11), wherein the electrode (11) includes
a current collector (12) that includes a first surface (12a) and a second surface (12b) opposite to the first surface (12a);
active material layers provided on the first surface (12a) and the second surface (12b); and
a seal component (140) welded to the current collector (12), and
wherein each of the first surface (12a) and the second surface (12b) includes a part in which the active material layer is provided; and
an uncoated portion in which the active material layer is not provided,
the manufacturing method comprising:
a disposing step of disposing the seal component (140) on the uncoated portion of at least one of the first surface (12a) and the second surface (12b); and
a welding step of welding the seal component (140) to the current collector (12) by performing pressure heating in which the seal component (140) is heated while being pressed against the uncoated portion by using a jig (60), wherein the jig (60) includes:
a deformable heater portion (61) configured to heat the seal component (140); and
a pressing portion (64) configured to press the heater portion (61) against the seal component (140),
a direction in which the pressing portion (64) presses the seal component (140) is a pressing direction (D),
the pressing portion (64) is positioned alongside the heater portion (61) and the seal component (140) in the pressing direction (D), and is configured to be compressively deformed in the pressing direction (D) when pressing the heater portion (61),
the disposing step includes disposing the seal component (140) in the uncoated portion such that an exposed portion is formed in the uncoated portion, the exposed portion being a part in which the seal component (140) is not disposed and being positioned between the active material layer and the seal component (140), and
the welding step includes causing the heater portion (61) to generate heat in a state in which the heater portion (61) is pressed against the seal component (140) disposed in the uncoated portion and the exposed portion, while deforming the heater portion (61) such that the heater portion (61) conforms to the compressive deformation of the pressing portion (64).

2. The method for manufacturing the electrode (11) according to claim 1, wherein
the jig (60) is one of two jigs (60) positioned on opposite sides of the current collector (12) in the pressing direction (D),
each of the jigs (60) includes the heater portion (61) and the pressing portion (64),
the disposing step includes disposing the seal component (140) on the uncoated portion of each of the first surface (12a) and the second surface (12b), and
the welding step includes performing the pressure heating, by using the two jigs (60), on the seal components (140) disposed on the uncoated portions of the first surface (12a) and the second surface (12b), and on the exposed portions of the first surface (12a) and the second surface (12b).

3. The method for manufacturing the electrode (11) according to claim 1 or 2, wherein
the seal component (140) includes:
a main body (140a) disposed on the uncoated portion; and
a protruding portion (140b) that extends from the main body (140a) and
protrudes beyond an outer edge (12e) of the current collector (12), and
the welding step includes causing the heater portion (61) to generate heat in a state in which the heater portion (61) is pressed against the seal component (140) except for at least a part of the protruding portion (140b).

4. The method for manufacturing the electrode (11) according to claim 1 or 2, wherein the welding step includes:
starting pressure heating of the exposed portion by the heater portion (61) and pressure heating of the seal component (140) by the heater portion (61) simultaneously; and
ending the pressure heating of the exposed portion by the heater portion (61) and the pressure heating of the seal component (140) by the heater portion (61) simultaneously.

## Patentansprüche

1. Verfahren zur Herstellung einer Elektrode (11), wobei die Elektrode (11) Folgendes umfasst:
einen Stromkollektor (12), der eine erste Oberfläche (12a) und eine der ersten Oberfläche (12a) gegenüberliegende zweite Oberfläche (12b) umfasst;
auf der ersten Oberfläche (12a) und der zweiten Oberfläche (12b) aufgebrachte Aktivmaterialschichten; und
eine Dichtungskomponente (140), die mit dem Stromkollektor (12) verschweißt ist, und
wobei sowohl die erste Oberfläche (12a) als auch die zweite Oberfläche (12b) ein Teil umfassen, in dem die Aktivmaterialschicht aufgebracht ist; und
einen unbeschichteten Abschnitt, in dem die Aktivmaterialschicht nicht aufgebracht ist,
wobei das Herstellungsverfahren folgende Schritte aufweist:
einen Anordnungsschritt zum Anordnen der Dichtungskomponente (140) auf dem unbeschichteten Abschnitt von mindestens einer der ersten Oberfläche (12a) und der zweiten Oberfläche (12b); und
einen Schweißschritt zum Verschweißen der Dichtungskomponente (140) mit dem Stromkollektor (12) durch Durchführen einer Druckerwärmung, bei der die Dichtungskomponente (140) erwärmt wird, während sie unter Verwendung einer Vorrichtung (60) gegen den unbeschichteten Abschnitt gedrückt wird, wobei die Vorrichtung (60) Folgendes umfasst:
einen verformbaren Heizabschnitt (61), der ausgebildet ist, um die Dichtungskomponente (140) zu erwärmen; und
einen Pressabschnitt (64), der ausgebildet ist, um den Heizabschnitt (61) gegen die Dichtungskomponente (140) zu drücken,
wobei eine Richtung, in der der Pressabschnitt (64) die Dichtungskomponente (140) andrückt, eine Andrückrichtung (D) ist,
der Pressabschnitt (64) in der Andrückrichtung (D) neben dem Heizabschnitt (61) und der Dichtungskomponente (140) positioniert ist und ausgebildet ist, um beim Andrücken des Heizabschnitts (61) in der Andrückrichtung (D) druckverformt zu werden,
der Anordnungsschritt das Anordnen der Dichtungskomponente (140) in dem unbeschichteten Abschnitt so umfasst, dass in dem unbeschichteten Abschnitt ein freiliegender Abschnitt gebildet wird, wobei der freiliegende Abschnitt ein Teil ist, in dem die Dichtungskomponente (140) nicht angeordnet ist und der zwischen der Aktivmaterialschicht und der Dichtungskomponente (140) positioniert ist, und
der Schweißschritt das Veranlassen des Heizabschnitts (61), Wärme in einem Zustand zu erzeugen, in dem der Heizabschnitt (61) gegen die in dem unbeschichteten Abschnitt und dem freiliegenden Abschnitt angeordnete Dichtungskomponente (140) gedrückt wird, umfasst, während der Heizabschnitt (61) so verformt wird, dass sich der Heizabschnitt (61) der Druckverformung des Pressabschnitts (64) anpasst.

2. Verfahren zur Herstellung der Elektrode (11) nach Anspruch 1, wobei
die Vorrichtung (60) eine von zwei Vorrichtungen (60) ist, die in Pressrichtung (D) auf gegenüberliegenden Seiten des Stromabnehmers (12) positioniert sind,
jede der Vorrichtungen (60) den Heizabschnitt (61) und den Pressabschnitt (64) umfasst,
der Anordnungsschritt das Anordnen der Dichtungskomponente (140) auf dem unbeschichteten Abschnitt sowohl der ersten Oberfläche (12a) als auch der zweiten Oberfläche (12b) umfasst, und
der Schweißschritt das Durchführen der Druckerwärmung umfasst, unter Verwendung der beiden Vorrichtungen (60) an den Dichtungskomponenten (140), die auf den unbeschichteten Abschnitten der ersten Oberfläche (12a) und der zweiten Oberfläche (12b) sowie auf den freiliegenden Abschnitten der ersten Oberfläche (12a) und der zweiten Oberfläche (12b) angeordnet sind.

3. Verfahren zur Herstellung der Elektrode (11) nach Anspruch 1 oder 2, wobei
die Dichtungskomponente (140) Folgendes umfasst:
einen Hauptkörper (140a), der auf dem unbeschichteten Abschnitt angeordnet ist; und
einen vorstehenden Abschnitt (140b), der sich vom Hauptkörper (140a) erstreckt und über eine Außenkante (12e) des Stromabnehmers (12) hinausragt, und
wobei der Schweißschritt umfasst, dass der Heizabschnitt (61) dazu gebracht wird, Wärme in einem Zustand zu erzeugen, in dem der Heizabschnitt (61) gegen die Dichtungskomponente (140) gedrückt wird, mit Ausnahme zumindest eines Teils des vorstehenden Abschnitts (140b).

4. Verfahren zur Herstellung der Elektrode (11) nach Anspruch 1 oder 2, wobei der Schweißschritt Folgendes umfasst:
das gleichzeitige Starten der Druckerwärmung des freiliegenden Abschnitts durch den Heizabschnitt (61) und der Druckerwärmung der Dichtungskomponente (140) durch den Heizabschnitt (61); und
das gleichzeitige Beenden der Druckerwärmung des freiliegenden Abschnitts durch den Heizabschnitt (61) und der Druckerwärmung der Dichtungskomponente (140) durch den Heizabschnitt (61).

## Revendications

1. Procédé de fabrication d'une électrode (11), dans lequel l'électrode (11) comporte
un collecteur de courant (12) qui comporte une première surface (12a) et une deuxième surface (12b) opposée à la première surface (12a) ;
des couches de matériau actif fournies sur la première surface (12a) et la deuxième surface (12b) ; et
un élément d'étanchéité (140) soudé au collecteur de courant (12), et
chacune de la première surface (12a) et de la deuxième surface (12b) comportant
une partie dans laquelle la couche de matériau actif est disposée ; et
une partie non revêtue dans laquelle la couche de matériau actif n'est pas disposée,
le procédé de fabrication comprenant :
une étape de disposition consistant à disposer l'élément d'étanchéité (140) sur la partie non revêtue d'au moins l'une de la première surface (12a) et de la deuxième surface (12b) ; et
une étape de soudage consistant à souder l'élément d'étanchéité (140) au collecteur de courant (12) en effectuant un chauffage sous pression dans lequel l'élément d'étanchéité (140) est chauffé tout en étant pressé contre la partie non revêtue à l'aide d'un gabarit (60), dans lequel
le gabarit (60) comporte :
une partie de chauffage déformable (61) configurée pour chauffer l'élément d'étanchéité (140) ; et
une partie de pression (64) configurée pour presser la partie de chauffage (61) contre l'élément d'étanchéité (140),
une direction dans laquelle la partie de pression (64) presse l'élément d'étanchéité (140) est une direction de pression (D),
la partie de pression (64) est positionnée le long de la partie de chauffage (61) et du élément d'étanchéité (140) dans la direction de pression (D), et est configurée pour être déformée par compression dans la direction de pression (D) lors de la pression exercée sur la partie de chauffage (61),
l'étape de disposition comporte la disposition de l'élément d'étanchéité (140) dans la partie non revêtue de telle sorte qu'une partie exposée soit formée dans la partie non revêtue, la partie exposée étant une partie dans laquelle l'élément d'étanchéité (140) n'est pas disposé et étant positionnée entre la couche de matériau actif et l'élément d'étanchéité (140), et
l'étape de soudage comporte le fait de faire en sorte que la partie de chauffage (61) génère de la chaleur dans un état dans lequel la partie de chauffage (61) est pressée contre l'élément d'étanchéité (140) disposé dans la partie non revêtue et la partie exposée, tout en déformant la partie de chauffage (61) de telle sorte que la partie de chauffage (61) s'adapte à la déformation par compression de la partie de pression (64).

2. Procédé de fabrication de l'électrode (11) selon la revendication 1, dans lequel
le gabarit (60) est l'un de deux gabarits (60) positionnés sur les côtés opposés du collecteur de courant (12) dans la direction de pression (D),
chacun des gabarits (60) comporte la partie de chauffage (61) et la partie de pression (64),
l'étape de disposition comporte la disposition de l'élément d'étanchéité (140) sur la partie non revêtue de chacune de la première surface (12a) et de la deuxième surface (12b), et
l'étape de soudage comporte la réalisation du chauffage sous pression en utilisant les deux gabarits (60), sur les composants d'étanchéité (140) disposés sur les parties non revêtues de la première surface (12a) et de la deuxième surface (12b), ainsi que sur les parties exposées de la première surface (12a) et de la deuxième surface (12b).

3. Procédé de fabrication de l'électrode (11) selon la revendication 1 ou 2, dans lequel
l'élément d'étanchéité (140) comporte :
un corps principal (140a) disposé sur la partie non revêtue ; et
une partie en saillie (140b) qui s'étend à partir du corps principal (140a) et fait saillie au-delà d'un bord extérieur (12e) du collecteur de courant (12), et
l'étape de soudage comporte le fait de faire en sorte que la partie de chauffage (61) génère de la chaleur dans un état dans lequel la partie de chauffage (61) est pressée contre l'élément d'étanchéité (140), à l'exception d'au moins une partie de la partie en saillie (140b).

4. Procédé de fabrication de l'électrode (11) selon la revendication 1 ou 2, dans lequel l'étape de soudage comporte :
le fait de démarrer simultanément le chauffage sous pression de la partie exposée par la partie de chauffage (61) et le chauffage sous pression de l'élément d'étanchéité (140) par la partie de chauffage (61) ; et le fait de mettre fin simultanément au chauffage sous pression de la partie exposée par la partie de chauffage (61) et au chauffage sous pression de l'élément d'étanchéité (140) par la partie de chauffage (61).
